(19) **Europäisches Patentamt**
**European Patent Office**
**Office européen des brevets**

(11) **EP 4 013 074 A1**

(12) **EUROPEAN PATENT APPLICATION**

(43) Date of publication:
**15.06.2022 Bulletin 2022/24**

(51) International Patent Classification (IPC):
***H04S 7/00*** *(2006.01)* ***H04W 4/02*** *(2018.01)*

(21) Application number: **21152486.3**

(52) Cooperative Patent Classification (CPC):
**H04W 4/026; H04S 7/304**

(22) Date of filing: **20.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2020 IN 202011053298**

(71) Applicant: **NXP B.V.**
**5656 AG Eindhoven (NL)**

(72) Inventors:
• **Meijer, Rinze Ida Mechtildis Peter**
**Redhill, Surrey RH1 1QZ (GB)**
• **Rajan Kesavelu Shekar, Pramod**
**Redhill, Surrey RH1 1QZ (GB)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(54) **WEARABLE APPARATUS AND METHOD FOR ORIENTATION DETECTION**

(57) A head-worn apparatus and method for determining head-orientation are described. The wearable apparatus includes at least three antennas configured to receive a RF signal transmitted from an RF transceiver device. Two of the at least three antennas are configured to be located at a first side of a user's head and at least one antenna of the at least three of the antennas is configured to be located at a second side of the of user's head. A first angle-of-arrival or angle-of-departure is determined from the RF signal received by or transmitted from at least two antennas configured to be located at the first side of a user's head. A second angle-of-arrival or angle-of-departure is determined from the RF signal received by or transmitted by at least two antennas, at least one of the antennas configured to be located at the second side of the user's head. The orientation of the user's head with respect to the RF transceiver device is determined from the first angle-of-arrival or angle-of-departure and the second angle-of-arrival or angle-of-departure.

**FIGURE 1A**

**EP 4 013 074 A1**

# Description

FIELD

This disclosure relates to a wearable apparatus and method for detecting the orientation of the head of a wearer of the wearable apparatus.

BACKGROUND

Wearable devices such as headphones or earbuds may include transceivers for wireless RF communication for example using Bluetooth or Near-Field Magnetic Induction (NFMI) or Near-Field electrical and Magnetic Induction (NFEMI). Audio data may be wirelessly streamed to the earbuds from a paired device including a transceiver. In addition audio data or other data may be transferred between left and right earbuds.

SUMMARY

Various aspects of the disclosure are defined in the accompanying claims. In a first aspect there is provided a head-worn wearable apparatus comprising: at least three antennas configured to receive a RF signal transmitted from a RF transceiver device; at least one processing unit coupled to the at least three antennas; wherein two antennas of the at least three antennas are configured to be located at a first side of a user's head and at least one antenna of the at least three of the antennas is configured to be located at a second side of the of user's head; at least one processing unit coupled to the at least three antennas and configured to: determine a first angle-of-arrival value from the RF signal received by at least two antennas configured to be located at the first side of a user's head; determine a second angle-of-arrival value from the RF signal received by at least two antennas, at least one of the antennas configured to be located at the second side of the user's head; and determine an orientation of the user's head with respect to the RF transceiver device from the first angle-of-arrival value and the second angle-of-arrival value.

In one or more embodiments, the at least three antennas may comprise a first antenna, a second antenna, a third antenna and a fourth antenna and the wearable apparatus may further comprise: a first transceiver coupled to the first antenna and the second antenna, the first and second antennas configured to be located at the first side of the user's head; a second transceiver coupled to a third antenna and fourth antenna, the third and fourth antennas configured to be located at the second side of the user's head; at least one processing unit coupled to the first transceiver and the second transceiver and configured to determine the first angle-of-arrival value of the signal received by the first transceiver and the second angle-of-arrival value of the signal received by the second transceiver.

In one or more embodiments, the at least one processing unit may be further configured to determine from the head orientation that the user is facing towards an object having a fixed relative location with respect to the RF transceiver device.

In one or more embodiments, the wearable apparatus may be further configured to receive audio and/or video data dependent on the determined head orientation with respect to an object having a fixed relative location with respect to the RF transceiver device.

In one or more embodiments, the wearable apparatus may be further configured to receive audio and video data dependent on a user request and the determined head orientation with respect to an object having a fixed relative location with respect to the RF transceiver device.

In one or more embodiments, the wearable apparatus may be further configured to stop receiving audio and/or video data in response to at least one of a user required and determining from the head orientation that the user is facing away from an object having a fixed relative location with respect to the RF transceiver device.

In one or more embodiments, the received audio and/or video data may comprise object-related information.

In one or more embodiments, the at least one processing unit may be further configured to determine a received signal strength value of at least one of the RF signal received by the first transceiver and the RF signal received by the second transceiver and wherein the wearable apparatus is further configured to determine a distance value between the wearable apparatus and the further RF transceiver device and to receive further audio and/or video data dependent on the head orientation with respect to an object having a fixed relative location with respect to the RF transceiver device and the distance of the object from the user.

In one or more embodiments, the at least one processing unit may be further configured to determine a time-of-flight value of an RF signal transmitted to/or from the RF transceiver device and wherein the wearable apparatus is further configured to determine a distance value between the wearable apparatus and the RF transceiver device and to receive further audio and/or video data dependent on the head orientation with respect to an object having a fixed relative location with respect to the RF transceiver device and the distance of the object from the user.

The wearable apparatus may be configured as one of headphones comprising a left headphone and a right headphone, a pair of hearable devices comprising a left hearable device and a right hearable device, and eyewear.

In a second aspect, there is provided a RF transceiver device comprising an antenna coupled to a processing unit, wherein the RF transceiver is configured to receive an RF signal from a head-worn wearable apparatus, the wearable apparatus comprising: at least three antennas; wherein two antennas of the at least three antennas are configured to be located at a first side of a user's head and at least one antenna of the at least three of the antennas is configured to be located at a second side of the of user's head; and wherein the processing unit is configured to: determine a first angle-of-departure value of a received RF signal transmitted by at least two antennas configured to be located at the first side of a user's head; determine a second angle-of-departure value from a received RF signal transmitted by at least two antennas, at least one of the antennas configured to be located at the second side of the user's head; and determine an orientation of the user's head with respect to the RF transceiver device from the first angle-of-departure value and the second angle-of-departure value.

Embodiments of the wearable apparatus may be included in a wireless communication system for determining head orientation comprising the wearable apparatus and an RF transceiver device.

In a third aspect, there is provided a method of determining head orientation using a wearable head-worn apparatus comprising at least three antennas configured to receive a RF signal transmitted from an RF transceiver device; wherein two antennas of the at least three antennas are configured to be located at a first side of a user's head and at least one antenna of the at least three of the antennas is configured to be located at a second side of the of user's head; wherein the method comprises determining a first angle-of-arrival value from the RF signal received by at least two antennas configured to be located at the first side of a user's head; determining a second angle-of-arrival value from the RF signal received by at least two antennas, at least one of the antennas configured to be located at the second side of the user's head; determining an orientation of the user's head with respect to the RF transceiver device from the first angle-of-arrival value and the second angle-of-arrival value.

In one or more embodiments, the method may further comprise transmitting a data request from the wearable apparatus in response to determining that the user is facing toward the RF transceiver device from the determined head orientation.

In one or more embodiments, the method may further comprise receiving audio and/or video data from the RF transceiver device.

In one or more embodiments, the method may further comprise stopping receiving audio and/or video data in response to at least one of a user request and determining that the user is facing away from the RF transceiver device.

In one or more embodiments, the method may further comprise determining a distance between the wearable apparatus and the further transceiver from the received signal strength indication, RSSI, of the RF signal and transmitting a data and/or connection request dependent on the user head orientation and the distance value.

In one or more embodiments, the method may further comprise determining a distance between the wearable apparatus and the RF transceiver device from the time-of-flight, of an RF signal transmitted between the wearable apparatus and the RF transceiver device and transmitting a data and/or connection request dependent on the user head orientation and the distance value.

In a fourth aspect, there is provided a method of determining head orientation using a wearable head-worn apparatus comprising at least three antennas and configurable to transmit an RF signal to an RF device comprising a RF transceiver device; wherein two antennas of the at least three antennas are configured to be located at a first side of a user's head and at least one antenna of the at least three of the antennas is configured to be located at a second side of the of user's head; wherein the method comprises: determining a first angle-of-departure value of the RF signal transmitted by at least two antennas configured to be located at the first side of the user's head and received by the RF transceiver device; determining a second angle-of-departure value of the RF signal received by at least two antennas, at least one of the antennas configured to be located at the second side of the user's head; determining an orientation of the user's head with respect to the RF transceiver device from the first angle-of-departure value and the second angle-of-departure value.

BRIEF DESCRIPTION OF THE DRAWINGS

In the figures and description like reference numerals refer to like features. Embodiments are now described in detail, by way of example only, illustrated by the accompanying drawings in which:

Figure 1A shows a head-worn wearable apparatus and system for detecting head orientation according to an embodiment.

Figure 1B shows the wearable apparatus and system configured to detect head orientation using three antennas of the wearable apparatus.

Figure 2A shows a method of detecting head orientation using a head-worn wearable apparatus according to an embodiment.

Figure 2B illustrates a method of detecting head orientation using a head-worn wearable apparatus according to an embodiment.

Figure 3A shows a method of detecting head orientation and distance from an object using a wearable apparatus according to an embodiment.

Figure 3B illustrates a method of detecting head orientation and distance from an object using a wearable apparatus according to an embodiment.

Figure 4 shows a method of detecting head orientation with respect to an object using a wearable apparatus according to an embodiment.

Figure 5A shows an example use-case of a user wearing a wearable apparatus according to an embodiment when viewing an object of interest.

Figure 5B shows an example use-case of a user wearing a wearable apparatus according to an embodiment when looking away from an object.

Figure 5C illustrates an example use-case of a user wearing a wearable apparatus according to an embodiment when facing in the opposite direction from an object.

Figure 5D shows an example use-case of a user wearing a wearable apparatus according to an embodiment at various distances from an object of interest.

Figure 5E shows an example use-case of a user wearing a wearable apparatus according to an embodiment and facing towards an object of interest, in the presence of multiple objects in the same room and neighbouring rooms.

Figure 6 shows a hearable apparatus and system for detecting head orientation according to an embodiment.

Figure 7 illustrates a method for determining whether an object is a qualified object according to an embodiment.

Figure 8 illustrates a method for determining the angular direction between a user and an object according to an embodiment.

Figure 9 shows a method of information streaming according to an embodiment.

DETAILED DESCRIPTION OF EMBODIMENTS

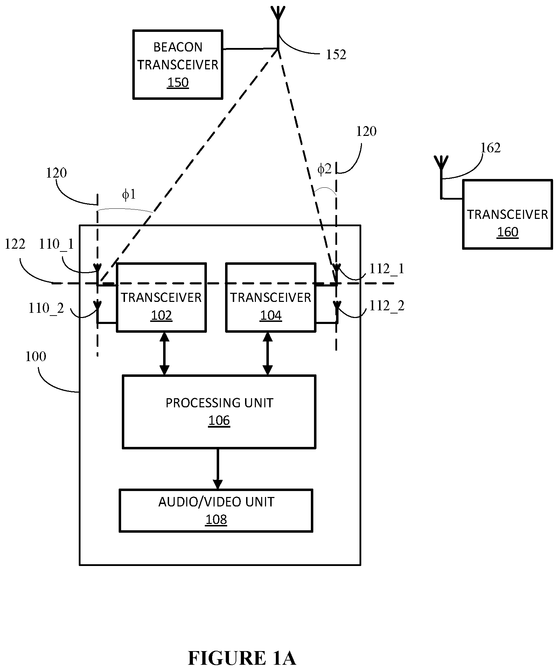

Figure 1A shows a wearable apparatus 100 for detecting head orientation according to an embodiment. The wearable apparatus 100 may include a first wireless transceiver 102, a second wireless transceiver 104, and a processing unit 106. The wearable apparatus 100 may optionally include an audio and/or video unit 108 for processing and outputting audio, video, or a combination of audio and video. The first wireless transceiver 102 may be connected to a first antenna 110_1 and second antenna 110_2. The first wireless transceiver 102 may be connected to the processing unit 106 which may for example be implemented in hardware or by software running on microprocessor or digital signal processor. The processing unit 106 may have an output connected to the audio/video unit 108.

The wearable apparatus 100 may for example be a pair of headphones, or other wearable device such as a pair of earbuds. The wearable apparatus 100 may also be for example a pair of glasses, other eyewear or other head-worn apparatus. In each case the wearable apparatus 100 is configured such that when worn by a user, the antennas 110_1, 110_2 associated with the first transceiver 102 are located on one side of the user's head for example the left side, and the antennas 112_1 and 112_2 associated with the second transceiver 104 are located on the other side of the user's head for example the right side. The antennas 110_1, 110_2 may be located approximately in the same horizontal plane with one of the antennas toward the front of the user and the other antennas. The terms left side of the head and right side of the head as used herein may refer to any location at the left half of the head or right half of the head. In some examples, more than two antennas may be used at each side which may improve the accuracy.

In operation, the wearable device 100 may receive an RF signal transmitted by an external transceiver for example the beacon transceiver 150 and associated beacon transceiver antenna 152. In some examples, the beacon transceiver 150 may be located adjacent to or on an object of interest (not shown). The term beacon transceiver as used herein refers to a transceiver which can operate at least partially in a beacon mode for example as a Bluetooth beacon. The transceivers 102 and 104 and the beacon transceivers 150 may be implemented for example using the Bluetooth LE 5.X standard or other communication standard such as ultra-wide-band (UWB) which supports angle-of-arrival or angle-of-departure and direction finding.

The signals received by transceiver 102 may be used by the processing unit 106 determine a first angle $\phi1$ using an angle-of-arrival method. The signal is received by transceiver 104 may be used by the processing unit 160 determine a second angle $\phi2$ using an angle-of-arrival method. It will be appreciated that determined angles $\phi1$, $\phi2$ with respect to reference axes 120,122 as illustrated are only one option and other equivalent angle values with respect to axes 120,122 may be used.

Alternatively a signal may be transmitted by the transceiver 102 and the transceiver 104 which is then received by the beacon transceiver 150. In this case the signals received by the beacon transceiver 150 may be used by a processor (not shown) coupled to the beacon transceiver 150 to determine a value of the first angle $\phi1$ and the second angle $\phi2$ using an angle-of-departure method.

Because of the location of the antennas 110_1, 110_2 and antennas 112_1, 112_2, by comparing the values of the first angle $\phi1$ and the second angle $\phi2$, the

orientation of the head of a user with respect to the beacon transceiver 150 may be determined.

In some examples, the beacon transceiver 150 may be located near or on an object of interest which may for example be in a shop or museum. The processing unit 106 may compare the first angle $\phi1$ and the second angle $\phi2$ together with the assumed location of the antennas 110_1, 110_2 and antennas 112_1, 112_2 to determine whether or not the user is looking directly towards the beacon transceiver 150 and thereby looking at the object of interest. The location of the antennas on the head of a user can be assumed to be consistent for wearable devices such as hearables or headphones where one headphone is designated for the left side and the other is designated for the right side. Similarly for eyewear such as glasses the orientation of left and right when worn will be consistently the same. In response to determining that a user is looking directly at the beacon transceiver 150, the processing unit 106 may for example request information relating to the object to be transmitted from the beacon transceiver 150. Alternatively or in addition, the processing unit 106 may for example request information relating to the object to be transmitted from a further transceiver 160 with associated antenna 162.

In other examples, the angle-of-arrival or angle-of-departure information may be combined for example with received signal strength information or time-of-flight information to determine the distance between the wearable apparatus 100 and the beacon transceiver 150. This additional information may be used to determine how close the user of the wearable apparatus 100 is to the beacon transceiver 150 and therefore to determine whether or not it is appropriate for the processing unit 106 to request further information and/or to receive data from the beacon transceiver 150 or the transceiver 160. In some examples, either or both of beacon transceiver 150 and the transceiver 160 may continuously or intermittently transmit audio and/or video data which may be received by the wearable apparatus 100 once wirelessly connected. In other examples, either or both of beacon transceiver 150 and the transceiver 160 may transmit further data following a specific data request from the wearable apparatus 100.

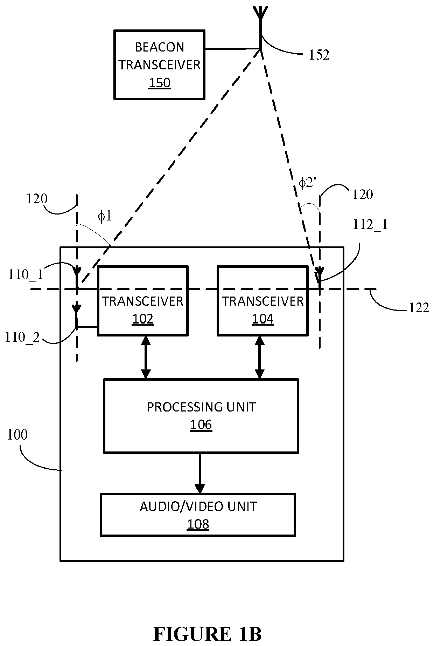

Figure 1B shows wearable apparatus 100 configured to determine head orientation using three antennas 110_1, 110_2, 112_1. The operation to determine the first angle-of-arrival $\phi1$ is as previously described. The operation to determine a second angle $\phi2'$ may use the antenna 112_1 from the right side and one antenna, for example antenna 110_1, from the left side. The signals received via the respective transceivers 102, 104 are then processed by the processing unit 106 to determine the second angle $\phi2'$.

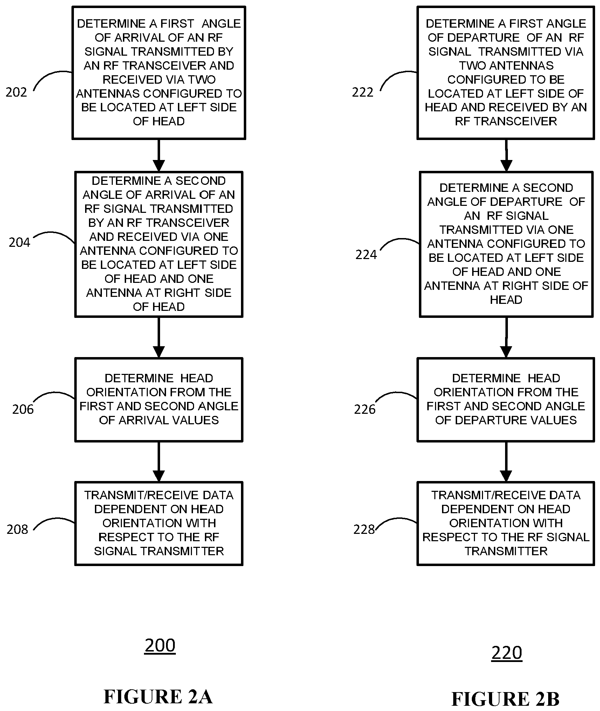

Figure 2A illustrates a method of determining head orientation 200 according to an embodiment. The method 200 may be implemented for example by the wearable apparatus 100. In step 202 a first angle-of-arrival of an RF signal transmitted by an RF transceiver for example beacon transceiver 150 may be determined. This RF signal may be received via two antennas configured to be located at the left side of the head of a user, for example antennas 110_1, 110_2. In step 204 a second angle-of-arrival of an RF signal transmitted by the same RF transceiver as for step 202 may be received by one antenna configured to be located at the right side of the head of a user, for example antenna 110_1, and one antenna configured to be located at the right side of the head of a user, for example antenna 112_1. In step 206, a value corresponding to the head orientation may be determined from the first angle-of-arrival value and the second angle-of-arrival value. In optional step 208, further data may be transmitted and/or received via the respective antennas of steps 204 and 202 dependent on the determined value of head orientation from the first and second angle-of-arrival values. For example, if the head orientation is determined to be such that the user is facing toward the transceiver 150, a connection request may be transmitted to the transceiver 150. It will be appreciated that in other examples the operation at step 202 may use two antennas located at the right side instead of the left side. It will be appreciated in general that the terms right side and left side may be used interchangeably.

Figure 2B illustrates a method 220 of determining head orientation according to an embodiment. The method 220 may be implemented for example by the wearable apparatus 100 and the beacon transceiver 150. In step 222 a first angle-of-departure of a first RF signal transmitted via two antennas configured to be located at the left side of the head of a user and received by an RF transceiver, for example beacon transceiver 150 may be determined. The first RF signal may further include an identifier to indicate that the signal was transmitted from the left side. In step 224 a second RF signal may be transmitted via one antenna configured to be located at the right side of the head of a user for example antenna 112_1 and one antenna configured to be located at the left side for example antenna 110_1. The second RF signal may include an identifier to indicate that the signal was transmitted from the left side and right side. The second RF signal may be received by the RF transceiver, for example beacon transceiver 150 which may determine a second angle-of-departure. In step 226, a value corresponding to the head orientation may be determined from the first angle-of-departure value and the second angle-of-departure value. In step 228, optionally further data may be transmitted and/or received via the respective antennas of steps 204 and 202 dependent on the determined value of head orientation from the first and second angle-of-departure values.

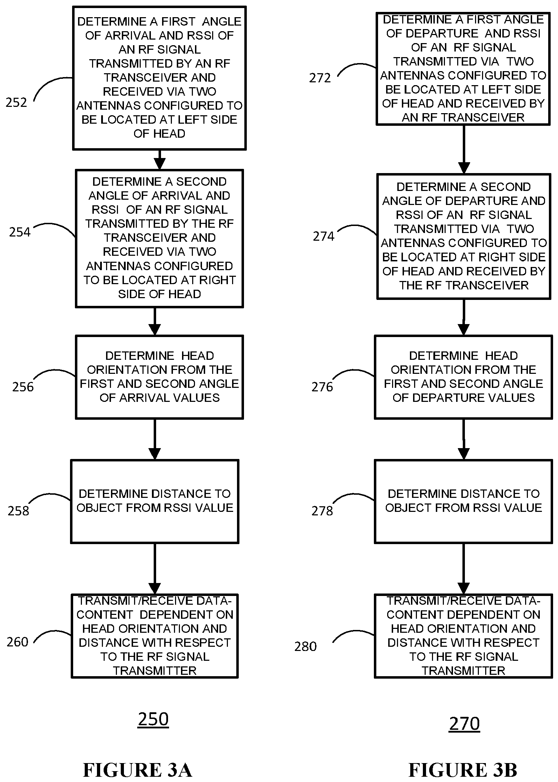

Figure 3A shows a method 250 of detecting head orientation and distance from an object using a wearable apparatus according to an embodiment. The method 250 may for example be implemented by the wearable apparatus 100 and a beacon transceiver 150 which may be located on or near an object. In step 252 a first angle-of-arrival of an RF signal transmitted by an RF transceiver, for example beacon transceiver 150, may be determined together with a received signal strength indication (RSSI) value. This RF signal may be received via two antennas configured to be located at the left side of the head of a user. In step 254 a second angle-of-arrival of an RF signal transmitted by the same RF transceiver as for step 252 may be received via two antennas configured to be located at the right side of the head of a user together with a received signal strength indication (RSSI) value. In step 256, a value corresponding to the head orientation may be determined from the first angle-of-arrival value and the second angle-of-arrival value. In step 258, a value corresponding to the distance between an object associated with the RF transceiver may be determined from at least one of the RSSI values determined in steps 254 and 256.

In step 260, optionally further data may be transmitted and/or received via the respective antennas of steps 254 and 252 dependent on the determined value of head orientation from the first and second angle-of-arrival values and the distance between the user and an object determined from the RSSI value. In other examples, a distance value may be determined using for example time-of-flight instead of the RSSI value.

Figure 3B illustrates a method 270 of determining head orientation and distance with respect to an object according to an embodiment. The method 270 may be implemented for example by the wearable apparatus 100 and the beacon transceiver 150. In step 272 a first angle-of-departure of an RF signal may be determined. The RF signal may be transmitted via two antennas configured to be located at the left side of the head of a user and received by a an RF transceiver, for example beacon transceiver 150. A first RSSI value of the RF signal at the RF receiver may also be determined. In step 274 a second angle-of-departure of an RF signal may be determined. The RF signal may be transmitted via two antennas configured to be located at the right side of the head of a user and received by an RF transceiver, for example beacon transceiver 150. A second RSSI value of the RF signal at the RF receiver may also be determined in step 274. In step 276, a value corresponding to the head orientation may be determined from the first angle-of-departure value and the second angle-of-departure value. In step 278, a value corresponding to the distance between an object associated with the RF transceiver may be determined from at least one of the RSSI values determined in steps 274 and 276.

In step 280, optionally further data may be transmitted and/or received via the respective antennas of steps 272 and 274 dependent on the determined value of head orientation from the first and second angle-of-departure values.

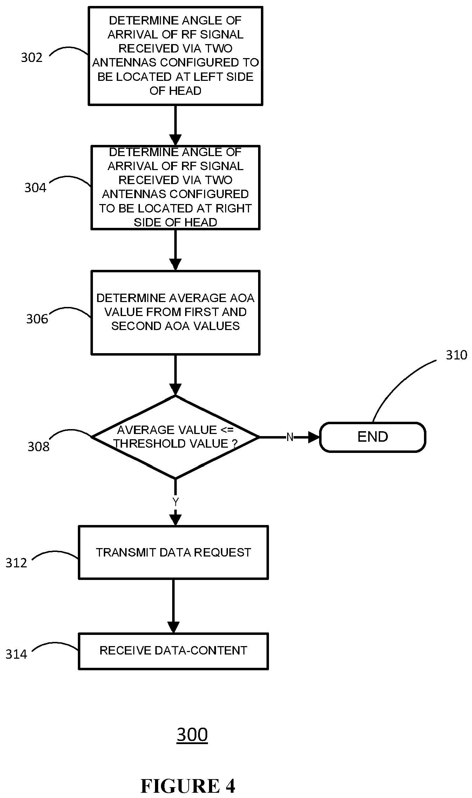

Figure 4 shows a method of detecting head orientation 300 with respect to an object using a wearable apparatus according to an embodiment. In step 302 and angle-of-arrival may be determined of an RF signal received via two antennas configured to be located at the left side of the head of the user. In step 304, an angle-of-arrival of an RF signal may be determined. The RF signal may be received via two antennas configured to be located at the right side of the head of the user. In step 306 an average angle-of-arrival value may be determined from the first and second angle-of-arrival values. In step 308 the average value determined in step 306 may be compared with a threshold value. If the average value is greater than the threshold value then the method proceeds to step 310 and finishes. Returning to step 308, if the average value is less than or equal to the threshold value, the method moves to step 312 and a data request may be transmitted. In step 314, the data content requested which may include audio and/or video data may be received. For example, with reference to figure 1, a data request may be transmitted by the wearable apparatus 100 to the beacon transceiver 150 or alternatively to the transceiver 160. In response to receiving a data request, data content may be received by the wearable apparatus 100 which may be related to an object associated with beacon transceiver 150.

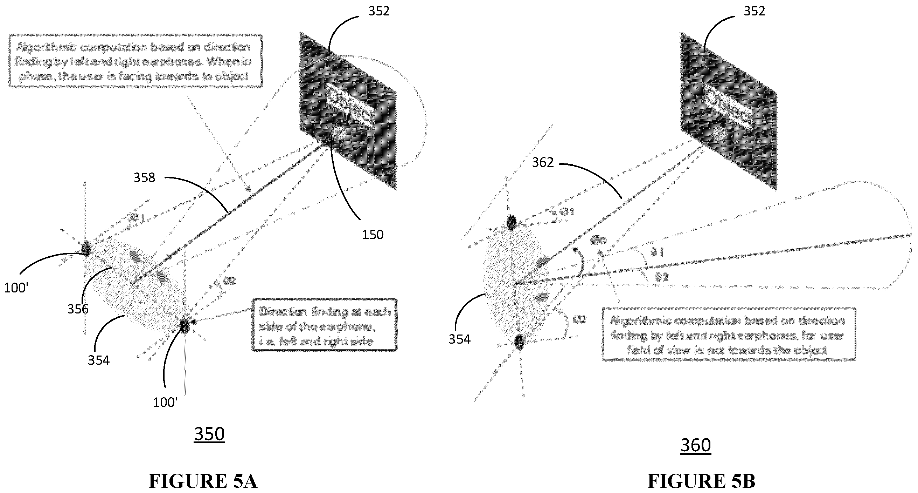

Figure 5A shows an example scenario 350 of a user 354 wearing wearable apparatus 100 configured as earbuds or headphones, shown as wearable apparatus 100' when viewing an object 352. In this example, the antennas 110_1, 110_2 may be located on the left side and antennas 112_1, 112_2 may be located on the right side. Figure 5B shows an example scenario 360 of a user 354 wearing wearable apparatus 100' according to an embodiment when not looking an object 352. The object 352 may include beacon transceiver 150. In these scenarios, the angle-of-arrival of a signal from the beacon 150 may be determined as previously described. The wearable apparatus 100' comprises two antennas on each side but may include three antennas each side for determining a three-dimensional location by determining an angle-of-arrival or angle-of-departure value in the vertical plane as well as the horizontal plane. However, more typically, since headphones, hearables and smart eyewear such as smart glasses may be space-limited, two antennas may be located at each side of the user's head.

Direction finding of the object may be determined at each side of wearable apparatus 100', for example using Bluetooth Low Energy (BLE) direction finding. BLE direction finding requires an antenna array at one side of the link: at least three antennas are needed to determine a three dimensional view. A direction is determined based on the phase difference between the signal arriving at each antenna of the antenna array. In each case, special direction finding signals are transmitted by one device and the signal is then used by another device to calculate the direction of the received signal.

An artificial reference axis 358 for user line-of-sight which is orthogonal to axis 356 between the earbuds illustrates the direction of view of the user 352. For example, an antenna array of two BLE antennas may be arranged each side of the wearable apparatus 100 in parallel to this reference axis 358. The angle $\phi1$ refers to the angle-of-arrival at the left side as illustrated. The angle $\phi2$ refers to the angle-of-arrival at the right side as illustrated.

After wearable apparatus 100' receives the signal from the object 352, the head orientation may be determined and hence it may be determined whether the user is looking at an object. This determination is now described in more detail with reference to the configuration described in figure 1A. Angle $\phi1$ is calculated at the left side of the wearable apparatus 100' by processing unit 106 from signals received via transceiver 102. Angle $\phi2$ is calculated at the right side of the wearable apparatus 100' by processing unit 106 from signals received via transceiver 102. Next the processing unit 106 may determine the average angle $\phi n$: $\phi n = (\phi1+\phi2)/2$.

The equivalent axis 362 at the calculated angle $\phi n$ with respect to the reference axis 358 shows the line-of-sight between user and object. A zero value of $\phi n$ may indicate that the user is directly looking in the direction of the object which is the scenario 350 illustrated in figure 5A.

Reference angles $\theta1$ and $\theta2$ may be defined with respect to reference axis 358 which determines a threshold that defines the user field-of-view. For a user with normal vision, it may be assumed that $|\theta1| = |\theta2|$. However, in some examples, these threshold values may be adjusted dependent on the field-of-view of the user 352. When $|\phi n| \leq |\theta1|$ or $|\phi n| \leq |\theta2|$, the object is considered to be within the user's field of view and when $|\phi n| > |\theta1|$ or $|\phi n| > |\theta2|$, the object is considered to be outside the user's field of view. The wearable apparatus 100' may repeat the determination of the angle-of-arrival and thereby head orientation to keep track of the direction of view of the user 352. In some examples, a three-dimensional view for angle-of-arrival may computed with the analysis of the signal arriving at three or more available antennas which may be BLE antennas. For example, two or more antennas may be arranged in an orientation in a left side hearable, headphone or arm of the glasses which is approximately horizontal when worn. Two or more antennas may be arranged in an orientation in a right side hearable, headphone or arm of the glasses which is approximately vertical when worn, i.e. orthogonal to the orientation in the left side.

In some other examples, two antennas may be arranged on smart glasses at the front but located at the left side of the face and at least one further antenna may be arranged on smart glasses at the front but located at the right side of the face.

The separation between the two antennas and the at least one further antenna may determine the accuracy of the determination of the head orientation.

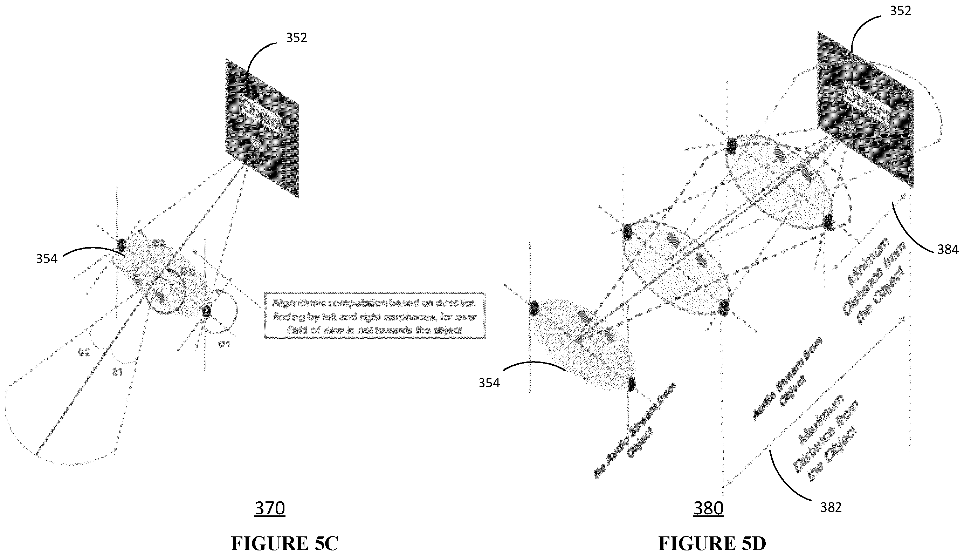

Figure 5C shows a use case 370 where the user is facing the opposite direction. In this case $|\phi n| > |\theta1|$ or $|\phi n| > |\theta2|$ as previously described and $|\phi n|$ will be approximately 180 degrees.

In some examples, the distance to an object may be determined to judge whether the user is in close proximity. The proximity information may be used for example to determine whether it makes sense to request receiving information from the object. For example, this information can be in the form of audio stream to provide information about a certain painting (object). In same examples, requests for information data are transmitted only when the user is facing the object at a relatively close distance, for example less than 2 metres. Moreover, when the user is not in the same room as the object, it also makes no sense to request receiving information.

Figure 5D illustrates a use case 380 where a distance range is bounded by a minimum value 384 and maximum value 382. Data may only be requested or received when the distance is within the range. A Received Signal Strength Indicator (RSSI) measurement may be used perform a distance estimation between user and object(s). In case of multiple objects, the same information may also be used to determine which of the objects is closest to the user, and hence which of the objects should be selected.

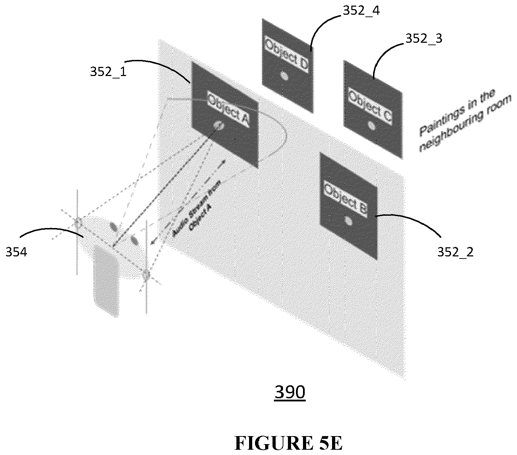

Figure 5E shows an example in case of multiple objects 390, each with an associated transceiver, for example beacon transceiver 150. Two objects 352_1, 352_2 are in the same room as the user, while there are two additional objects 352_3, 352_4 in a neighbouring room. As illustrated, the user 354 is looking at object 352_1 while being within the bounded distance range. The user 354 may request information from object 352_1 and for example initiate an audio data stream transmission from object 352_1. Object 352_1 is selected in preference to 352_4 despite both objects being in the same direction with respect to the user 354. The object 352_1 is selected from the distance related measurement as this object is closer to the user than object 352_4. Object 352_2 and 352_3 are not selected because they are outside a determined field of view of the user 354 when the information request was made.

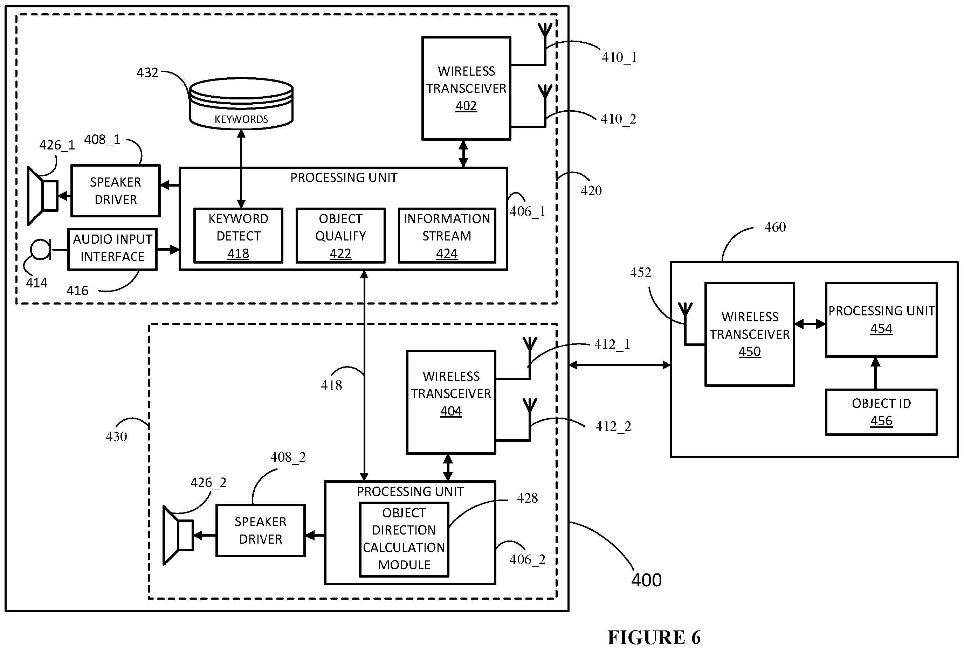

Figure 6 shows a hearable apparatus 400 and system including hearable apparatus 400 and object 460 for detecting head orientation according to an embodiment.

The hearable apparatus 400 may include a primary side 420 and secondary side 430 which may correspond to a left side and right side of the hearable apparatus 400. The primary side 420 may include a wireless transceiver 402 and two antennas 410_1, 410_2. The primary side 420 may include a processing unit 402_1, speaker driver 408_1, speaker 426_1, microphone and audio input interface 416.

The secondary side 430 may include a wireless transceiver 404 and two antennas 412_1, 412_2. The secondary side 430 may include a processing unit 406 2, speaker driver 408 2, and speaker 426_2.

In some examples, the primary side 420 and secondary side 430 may be wired or wirelessly coupled together. For example the primary side 420 may be in a left earbud or headphone and the secondary side 430 may be in a right earbud or headphone

The primary side wireless transceiver 402 may receive the beaconing information from the object 460. The wireless transceiver 402 may have two antennas 410_1 and 410_2 to be able to determine the angular direction from a user to an object 460. Primary side processing unit 406_1 may be coupled to the wireless transceiver 402. The primary side processing unit 406_1 may include an object qualifier module 422 which may determine whether the object is within the close proximity and the angular view between user and object from the primary side. The object qualifier module 422 may also receive the angle-of-arrival or angle-of-departure from the secondary side 430 and determine whether the user is looking at the object.

Primary side processing unit 406_1 may include information streaming module 424 to transmit or receive data to or from the hearable apparatus 400 and object 460. The audio input interface 416 may receive voice inputs from the user via microphone 414 whether information from the object shall be provided. Primary side processing unit 406_1 may include keyword detector 418 function to support a number of keywords which may be stored in "Keywords" memory 432. Alternatively keyword detector 418 may be implemented as part of the audio input interface 416 or as a stand-alone circuit.

The audio output interface includes a speaker driver 408_1 coupled to speaker 426_1 which receives audio data from the processing unit 406_1.

The secondary side wireless transceiver 404 may receive beaconing information from the object 460. The processing unit 406_2 may include object direction calculation module 428 which may determine the angular view between user and object. The audio output interface may include a speaker driver 408_2 coupled to speaker 426_2 which receives audio data from the processing unit 406_2.

The primary side 420 and secondary side 430 of the hearable apparatus 400 may be coupled preferably by wireless communication connection 418. In some examples this communication may be via wireless transceivers 402,404. In other examples a separate wireless transceiver (not shown) implemented for NF(e)MI communication in each of the primary side 420 and secondary side may be used. Angular information received at secondary side 430 may be transmitted by the secondary side processing unit 406_2 to the primary side processing unit 406_1, such that it can be determined whether the user is looking at the object 460.

Streaming information such as audio data from the object may be received at primary side 420, which may then be transmitted to the secondary side 430. Alternatively, the information may be received at both primary-side 420 and secondary side 430 simultaneously. In the former case, the primary side processing unit 406_1 may transmit the information to the secondary side 430. In the latter case, both the processing units at primary-side 420 and secondary side 430 may independently process the information stream & related synchronization for playback to the user.

The object 460 may include wireless transceiver 450 and associated antenna 452, a processing unit 454 coupled to the wireless transceiver and an object id memory 456. The processing unit 454 may be implemented in hardware or a combination of software executed on a processor such as a microprocessor or digital signal processor. The object 460 may be configured for example as a Bluetooth transceiver or UWB transceiver. The object 460 may operate in a beaconing mode enabled by the processing unit 454 to provide the direction finding information together with related unique object identification value from the object ID memory 456.

The system including the hearable apparatus 400 and object 460 may operate according to one or more methods described herein to determine the orientation of the head of a user with respect the object 460.

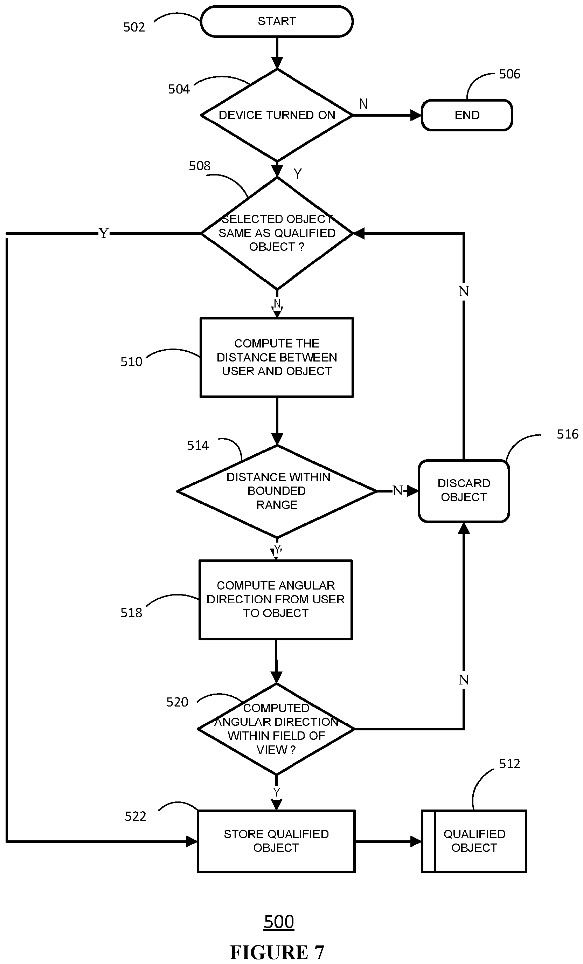

Figure 7 illustrates a method for determining whether an object is a qualified object 500 according to an embodiment. Method 500 may be implemented for example on the primary side 430 of the hearable device 400 by the object qualification module 422.

In step 502 the process starts. In step 504 a check is made to see if the device is turned on; if the device is not turned on the process ends in step 506. Otherwise, the method 500 proceeds to step 508 where a check is made to determine whether a selected object is the same as a previously qualified object. The object may be selected for example based on a strongest RSSI signal received from a number of transmitters. If the selected object is the same as a previously qualified object, then the method proceeds to step 522 and the qualified object which is the same as the currently selected object is re-stored as a qualified object 512. Otherwise the method proceeds to step 510 and the distance is computed between the user and the object using methods previously described, for example in methods 250 and 270. The distance between user and object can be estimated for example using a form of the Friis equation. This distance is referred to as r in the equation shown below.

$$P_{RX} = G_{TX}G_{RX}P_{TX}\left[\frac{\lambda}{4\pi r}\right]^2$$

Where $P_{TX}$ and $P_{RX}$ are the transmit and received signal powers $G_{TX}$ and $G_{RX}$ are the gains of the antennas at each link and $\lambda$ is the wavelength of the RF signal. The gain values $G_{TX}$ and $G_{RX}$ and transmit power $P_{TX}$ are predetermined values. The $G_{TX}$ and $P_{TX}$ values may be transmitted from the object 460 to the hearable apparatus 400 so that the distance may be determined by the hearable apparatus 400.

In step 514 a comparison may be made to determine whether the distance is within a bounded range. If the distance is not within a bounded range then the method moves to step 516 and the object is discarded.

Following step 516, the method returns to step 508 and another object selected. Otherwise the method moves to step 518 and an angular direction between the user and an object may be computed for example using the methods 250 or 270 i.e. angle-of-arrival or angle-of-departure of a RF signal. In step 520, the computed angular direction may be compared to the field-of-view of the user. If the angular direction is within field-of-view, then in step 522 the selected object may be stored as a qualified object 512. If the direction is not within the field-of-view, then following step 520 the method moves to step 516 and the object is discarded. Following step 516, the method returns to step 508 and another object is selected.

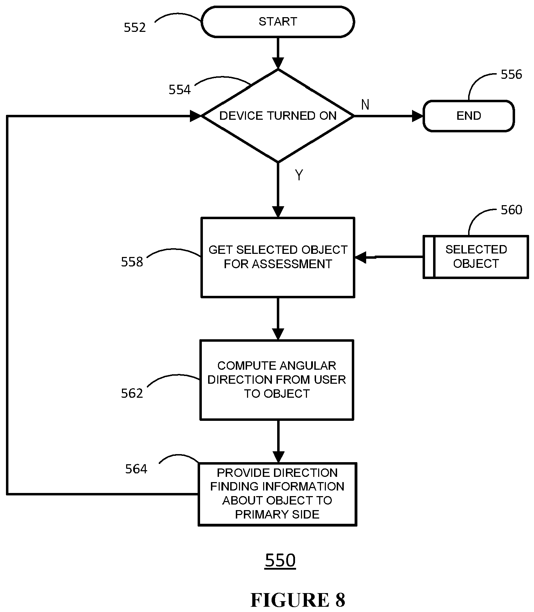

Figure 8 shows a method of direction finding 550 which may for example be implemented on the secondary side 430 of the wearable apparatus 400 for example by the object direction calculation module 428 . In step 552 the method starts and in step 554 a check is made to see if the device is turned on. If the device is not turned on then the method ends in step 556. Otherwise the method proceeds to 558 and a selected object 560 is received for assessment. In step 562 the angular direction between a user and an object may be computed. In step 564 the direction finding information i.e. the angular direction may be transmitted from the secondary side 430 the primary side 420.

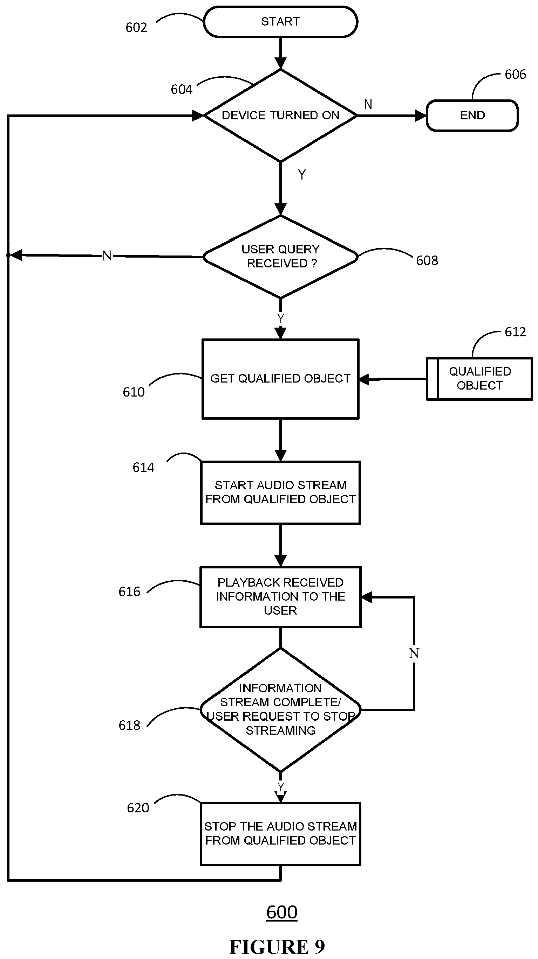

Figure 9 shows a method of information streaming 600 for a qualified object determined according to methods 500 and 550. The method 600 may be implemented for example by information streaming module 424 in the primary side 420 of the hearable apparatus 400. In step 602 the method starts. The method checks if the device turned on in step 604; if the device is not turned on or enabled then the method ends at step 606. Otherwise in step 608 a user check is made to see if a query has been received. This for example may be a check to determine if a keyword has been detected. If a user query has not been received then the device returns back to step 604. If a user query has been received then in step 610 the qualified object 612 is retrieved. In step 614 an information stream, for example an audio stream, may be transmitted from the qualified object. In step 616 the received information may be played back to the user of the hearable apparatus 400. In step 618 a check may be made to determine either whether the information stream is complete or whether there is a user request to stop the streaming. If the information stream is complete or the user has requested to stop streaming the method moves to step 620 and the reception of the audio stream from the qualified object is then stopped. Following from step 620, the method then returns to step 604 and the process repeats. Otherwise method returns to step 616 and the play back continues.

Embodiments described herein make use of application of wireless communication links between user worn devices and the object to determine whether an object is being viewed. Embodiments and methods avoid requirement for a camera system and associated processing for object feature extraction and associated database look-up. Embodiments may initiate receiving information from an object only when the user is looking at that particular object by determining whether the user is facing the object and optionally being in close proximity. Under these conditions, the user may initiate receiving information from that object on request.

Moreover, embodiments of the wearable apparatus may provide more robust determination of which object is being viewed when used in crowded environments, for example where the line-of-sight to an object is partly blocked. Moreover, in contrast to object/image recognition approaches determination of head orientation is independent on the quality of lighting. Furthermore much lower computational processing may be required to determine the head orientation and thereby the direction of view of the user of the wearable apparatus.

Embodiments may be included in a wearable Internet of Things (IoT) device which communicates with other IoT devices associated with objects which may be fixed or mobile roving objects. For example in museum-related applications such as audio or audio/visual tours and interaction with museum to obtain information about a given object by means of audio and/or video streaming. In other examples, the wearable apparatus may be used for example in landmark sight-seeing tours, for interaction with objects at the landmark by visitors to obtain information about the landmark in audio and/or visual format.

Exhibitions for interaction between the visitors or audience and exhibited objects. In other examples information points including a transceiver may be accessed, for example when a user is looking at the information point, or booth or the like. In some examples, information streaming may possibly be done via a 4G/5G network.

In other examples, the wearable apparatus may be used to request an object to perform a certain actions when looking at the object.

A head-worn apparatus and method for determining head-orientation are described. The wearable apparatus includes at least three antennas configured to receive a RF signal transmitted from an RF transceiver device. Two of the at least three antennas are configured to be located at a first side of a user's head and at least one antenna of the at least three of the antennas is configured to be located at a second side of the of user's head. A first angle-of-arrival or angle-of-departure is determined from the RF signal received by or transmitted from at least two antennas configured to be located at the first side of a user's head. A second angle-of-arrival or angle-of-departure is determined from the RF signal received by or transmitted by at least two antennas, at least one of the antennas configured to be located at the second side of the user's head. The orientation of the user's head with respect to the RF transceiver device is determined from the first angle-of-arrival or angle-of-departure and the second angle-of-arrival or angle-of-departure.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A head-worn wearable apparatus comprising:

   at least three antennas configured to receive a RF signal transmitted from a RF transceiver device;
   at least one processing unit coupled to the at least three antennas;
   wherein two antennas of the at least three antennas are configured to be located at a first side of a user's head and at least one antenna of the at least three of the antennas is configured to be located at a second side of the of user's head;
   at least one processing unit coupled to the at least three antennas and configured to:

      determine a first angle-of-arrival value from the RF signal received by at least two antennas configured to be located at the first side of a user's head;
      determine a second angle-of-arrival value from the RF signal received by at least two antennas, at least one of the antennas configured to be located at the second side of the user's head; and
      determine an orientation of the user's head with respect to the RF transceiver device from the first angle-of-arrival value and the second angle-of-arrival value.

2. The wearable apparatus of claim 1, wherein the at least three antennas comprises a first antenna, a second antenna, a third antenna and a fourth antenna and wherein the wearable apparatus further comprises:

   a first transceiver coupled to the first antenna and the second antenna, the first and second antennas configured to be located at the first side of the user's head;
   a second transceiver coupled to a third antenna and fourth antenna, the third and fourth antennas configured to be located at the second side of the user's head;
   at least one processing unit coupled to the first transceiver and the second transceiver and configured to determine the first angle-of-arrival value of the signal received by the first transceiver and the second angle-of-arrival value of the signal received by the second transceiver.

3. The wearable apparatus of any preceding claim wherein the at least one processing unit is further configured to determine from the head orientation that the user is facing towards an object having a fixed relative location with respect to the RF transceiver device.

4. The wearable apparatus of any preceding claim further configured to receive audio and/or video data dependent on the determined head orientation with respect to an object having a fixed relative location with respect to the RF transceiver device.

5. The wearable apparatus of any of claims 1 to 3 further configured to receive audio and video data dependent on a user request and the determined head orientation with respect to an object having a fixed relative location with respect to the RF transceiver device.

6. The wearable apparatus of claim 4 or 5 further configured to stop receiving audio and/or video data in response to at least one of a user request and determining from the head orientation that the user is facing away from the object.

7. The wearable apparatus of any of claims 4 to 6 wherein the received audio and/or video data comprises object-related information.

8. The wearable apparatus of any preceding claim, wherein the at least one processing unit is further configured to determine a received signal strength value of at least one of the RF signal received by the first transceiver and the RF signal received by the second transceiver and wherein the wearable apparatus is further configured to determine a distance value between the wearable apparatus and the further RF transceiver device and to receive further audio and/or video data dependent on the head orientation with respect to an object having a fixed relative location with respect to the RF transceiver device and the distance of the object from the user.

9. The wearable apparatus of any preceding claim, wherein the at least one processing unit is further configured to determine a time-of-flight value of an RF signal transmitted to or received from the RF transceiver device and wherein the wearable apparatus is further configured to determine a distance value between the wearable apparatus and the RF transceiver device and to receive further audio and/or video data dependent on the head orientation with respect to an object having a fixed relative location with respect to the RF transceiver device and the distance of the object from the user.

10. The wearable apparatus of any preceding claim configured as one of headphones comprising a left headphone and a right headphone, a pair of hearable devices comprising a left hearable device and a right hearable device, and eyewear.

11. A wireless communication system for determining head orientation comprising the wearable apparatus of any preceding claim and a RF transceiver device.

12. A RF transceiver device comprising an antenna coupled to a processing unit, wherein the RF transceiver is configured to receive an RF signal from a head-worn wearable apparatus, the wearable apparatus comprising: at least three antennas; wherein two antennas of the at least three antennas are configured to be located at a first side of a user's head and at least one antenna of the at least three of the antennas is configured to be located at a second side of the of user's head; and wherein the processing unit is configured to:

   determine a first angle-of-departure value of a received first RF signal transmitted by at least two antennas configured to be located at the first side of a user's head;
   determine a second angle-of-departure value from a received second RF signal transmitted by at least two antennas, at least one of the antennas configured to be located at the second side of the user's head; and
   determine an orientation of the user's head with respect to the RF transceiver device from the first angle-of-departure value and the second angle-of-departure value.

13. A wireless communication system for determining head orientation comprising the wearable apparatus of any of claims 1 to 10 and the RF transceiver device of claim 12.

14. A method of determining head orientation using a head-worn wearable apparatus comprising at least three antennas configured to receive a RF signal transmitted from an RF transceiver device; wherein two antennas of the at least three antennas are configured to be located at a first side of a user's head and at least one antenna of the at least three of the antennas is configured to be located at a second side of the of user's head; wherein the method comprises
   determining a first angle-of-arrival value from the RF signal received by at least two antennas configured to be located at the first side of a user's head;
   determining a second angle-of-arrival value from the RF signal received by at least two antennas, at least one of the antennas configured to be located at the second side of the user's head;
   determining an orientation of the user's head with respect to the RF transceiver device from the first angle-of-arrival value and the second angle-of-arrival value.

15. A method of determining head orientation using a head-worn wearable apparatus comprising at least three antennas and configurable to transmit an RF signal to an RF device comprising a RF transceiver device; wherein two antennas of the at least three antennas are configured to be located at a first side of a user's head and at least one antenna of the at least three of the antennas is configured to be located at a second side of the of user's head; wherein the method comprises:

determining a first angle-of-departure value of the RF signal transmitted by at least two antennas configured to be located at the first side of the user's head and received by the RF transceiver device;
determining a second angle-of-departure value of the RF signal received by at least two antennas, at least one of the antennas configured to be located at the second side of the user's head;
determining an orientation of the user's head with respect to the RF transceiver device from the first angle-of-departure value and the second angle-of-departure value.

**FIGURE 1A**

**FIGURE 1B**

DETERMINE A FIRST ANGLE OF ARRIVAL OF AN RF SIGNAL TRANSMITTED BY AN RF TRANSCEIVER AND RECEIVED VIA TWO ANTENNAS CONFIGURED TO BE LOCATED AT LEFT SIDE OF HEAD

202

DETERMINE A SECOND ANGLE OF ARRIVAL OF AN RF SIGNAL TRANSMITTED BY AN RF TRANSCEIVER AND RECEIVED VIA ONE ANTENNA CONFIGURED TO BE LOCATED AT LEFT SIDE OF HEAD AND ONE ANTENNA AT RIGHT SIDE OF HEAD

204

DETERMINE HEAD ORIENTATION FROM THE FIRST AND SECOND ANGLE OF ARRIVAL VALUES

206

TRANSMIT/RECEIVE DATA DEPENDENT ON HEAD ORIENTATION WITH RESPECT TO THE RF SIGNAL TRANSMITTER

208

200

FIGURE 2A

DETERMINE A FIRST ANGLE OF DEPARTURE OF AN RF SIGNAL TRANSMITTED VIA TWO ANTENNAS CONFIGURED TO BE LOCATED AT LEFT SIDE OF HEAD AND RECEIVED BY AN RF TRANSCEIVER

222

DETERMINE A SECOND ANGLE OF DEPARTURE OF AN RF SIGNAL TRANSMITTED VIA ONE ANTENNA CONFIGURED TO BE LOCATED AT LEFT SIDE OF HEAD AND ONE ANTENNA AT RIGHT SIDE OF HEAD

224

DETERMINE HEAD ORIENTATION FROM THE FIRST AND SECOND ANGLE OF DEPARTURE VALUES

226

TRANSMIT/RECEIVE DATA DEPENDENT ON HEAD ORIENTATION WITH RESPECT TO THE RF SIGNAL TRANSMITTER

228

220

FIGURE 2B

DETERMINE A FIRST ANGLE OF ARRIVAL AND RSSI OF AN RF SIGNAL TRANSMITTED BY AN RF TRANSCEIVER AND RECEIVED VIA TWO ANTENNAS CONFIGURED TO BE LOCATED AT LEFT SIDE OF HEAD
— 252

DETERMINE A SECOND ANGLE OF ARRIVAL AND RSSI OF AN RF SIGNAL TRANSMITTED BY THE RF TRANSCEIVER AND RECEIVED VIA TWO ANTENNAS CONFIGURED TO BE LOCATED AT RIGHT SIDE OF HEAD
— 254

DETERMINE HEAD ORIENTATION FROM THE FIRST AND SECOND ANGLE OF ARRIVAL VALUES
— 256

DETERMINE DISTANCE TO OBJECT FROM RSSI VALUE
— 258

TRANSMIT/RECEIVE DATA-CONTENT DEPENDENT ON HEAD ORIENTATION AND DISTANCE WITH RESPECT TO THE RF SIGNAL TRANSMITTER
— 260

__250__

**FIGURE 3A**

DETERMINE A FIRST ANGLE OF DEPARTURE AND RSSI OF AN RF SIGNAL TRANSMITTED VIA TWO ANTENNAS CONFIGURED TO BE LOCATED AT LEFT SIDE OF HEAD AND RECEIVED BY AN RF TRANSCEIVER
— 272

DETERMINE A SECOND ANGLE OF DEPARTURE AND RSSI OF AN RF SIGNAL TRANSMITTED VIA TWO ANTENNAS CONFIGURED TO BE LOCATED AT RIGHT SIDE OF HEAD AND RECEIVED BY THE RF TRANSCEIVER
— 274

DETERMINE HEAD ORIENTATION FROM THE FIRST AND SECOND ANGLE OF DEPARTURE VALUES
— 276

DETERMINE DISTANCE TO OBJECT FROM RSSI VALUE
— 278

TRANSMIT/RECEIVE DATA-CONTENT DEPENDENT ON HEAD ORIENTATION AND DISTANCE WITH RESPECT TO THE RF SIGNAL TRANSMITTER
— 280

__270__

**FIGURE 3B**

302 → DETERMINE ANGLE OF
ARRIVAL OF RF SIGNAL
RECEIVED VIA TWO
ANTENNAS CONFIGURED TO
BE LOCATED AT LEFT SIDE
OF HEAD

304 → DETERMINE ANGLE OF
ARRIVAL OF RF SIGNAL
RECEIVED VIA TWO
ANTENNAS CONFIGURED
TO BE LOCATED AT RIGHT
SIDE OF HEAD

306 → DETERMINE AVERAGE AOA
VALUE FROM FIRST AND
SECOND AOA VALUES

308 → AVERAGE VALUE <=
THRESHOLD VALUE ? — N → END   310

Y

312 → TRANSMIT DATA REQUEST

314 → RECEIVE DATA-CONTENT

300

**FIGURE 4**

Algorithmic computation based on direction finding by left and right earphones. When in phase, the user is facing towards to object

358

352

Object

150

Ø1

Ø2

100'

356

354

100'

Direction finding at each side of the earphone, i.e. left and right side

350

**FIGURE 5A**

352

Object

362

Ø1

Øn

Ø1

Ø2

354

Ø2

Algorithmic computation based on direction finding by left and right earphones, for user field of view is not towards the object

360

**FIGURE 5B**

EP 4 013 074 A1

EP 4 013 074 A1

352

354

Ø2

Øn

Ø1

θ2

θ1

Algorithmic computation based on direction finding by left and right earphones, for user field of view is not towards the object

370

**FIGURE 5C**

352

384

Minimum Distance from the Object

354

No Audio Stream from Object

Audio Stream from Object

Maximum Distance from the Object

382

380

**FIGURE 5D**

390

**FIGURE 5E**

**FIGURE 6**

EP 4 013 074 A1

502 — START

504 — DEVICE TURNED ON — N → END — 506

Y

508 — SELECTED OBJECT SAME AS QUALIFIED OBJECT ?

Y →

N

510 — COMPUTE THE DISTANCE BETWEEN USER AND OBJECT

514 — DISTANCE WITHIN BOUNDED RANGE — N → DISCARD OBJECT — 516

Y

518 — COMPUTE ANGULAR DIRECTION FROM USER TO OBJECT

520 — COMPUTED ANGULAR DIRECTION WITHIN FIELD OF VIEW ? — N

Y

522 — STORE QUALIFIED OBJECT → QUALIFIED OBJECT — 512

500

**FIGURE 7**

START

552

554    DEVICE TURNED ON    N    556    END

Y

558    GET SELECTED OBJECT
FOR ASSESSMENT    560    SELECTED
OBJECT

562    COMPUTE ANGULAR
DIRECTION FROM USER
TO OBJECT

564    PROVIDE DIRECTION
FINDING INFORMATION
ABOUT OBJECT TO
PRIMARY SIDE

550

**FIGURE 8**

602 — START

604 — DEVICE TURNED ON — N → END — 606

Y

USER QUERY RECEIVED ? — 608

N ←

Y

610 — GET QUALIFIED OBJECT ← QUALIFIED OBJECT — 612

614 — START AUDIO STREAM FROM QUALIFIED OBJECT

616 — PLAYBACK RECEIVED INFORMATION TO THE USER

618 — INFORMATION STREAM COMPLETE/ USER REQUEST TO STOP STREAMING — N

Y

620 — STOP THE AUDIO STREAM FROM QUALIFIED OBJECT

600

FIGURE 9

Europäisches
Patentamt

European
Patent Office

Office européen
des brevets

## EUROPEAN SEARCH REPORT

Application Number

EP 21 15 2486

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 289 430 A1 (SNAP-AID PATENTS LTD [IL]) 7 March 2018 (2018-03-07) * abstract * * paragraph [0258] - paragraph [0522] * * figures 1-22 * | 1-15 | INV. H04S7/00 H04W4/02 |
| X | EP 2 031 418 A1 (HARMAN BECKER AUTOMOTIVE SYS [DE]) 4 March 2009 (2009-03-04) * abstract * * paragraph [0007] - paragraph [0078] * * figures 1-8 * | 1-15 | |
| X | US 2020/137509 A1 (STANEK DANIEL F [US] ET AL) 30 April 2020 (2020-04-30) * abstract * * paragraph [0006] - paragraph [0009] * * paragraph [0025] - paragraph [0126] * * figures 1-18 * | 1-15 | |

TECHNICAL FIELDS
SEARCHED (IPC)

H04W
H04S

The present search report has been drawn up for all claims

| Place of search | Date of completion of the search | Examiner |
|---|---|---|
| Munich | 28 June 2021 | Körbler, Günther |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 15 2486

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2021

| Patent document cited in search report | | Publication date | Patent family member(s) | | Publication date |
|---|---|---|---|---|---|
| EP 3289430 | A1 | 07-03-2018 | EP | 3289430 A1 | 07-03-2018 |
| | | | US | 2019182415 A1 | 13-06-2019 |
| | | | US | 2019387152 A1 | 19-12-2019 |
| | | | US | 2020195833 A1 | 18-06-2020 |
| | | | WO | 2016174659 A1 | 03-11-2016 |
| EP 2031418 | A1 | 04-03-2009 | EP | 2031418 A1 | 04-03-2009 |
| | | | US | 2009058606 A1 | 05-03-2009 |
| US 2020137509 | A1 | 30-04-2020 | US | 2020137509 A1 | 30-04-2020 |
| | | | WO | 2020086357 A1 | 30-04-2020 |

EPO FORM P0459

For more details about this annex : see Official Journal of the European Patent Office, No. 12/82